# EUROPÄISCHE PATENTSCHRIFT

(11) **EP 1 576 714 B1**
(45) Veröffentlichungstag und Bekanntmachung des Hinweises auf die Patenterteilung: **02.11.2011**
(21) Anmeldenummer: 03813517.4
(22) Anmeldetag: 15.07.2003
(51) Int. Cl.: H02K 7/116, E05F 15/16

(54) **Antriebseinheit für Stellantriebe im Kraftfahrzeug**
Drive unit for actuators in a motor vehicle
Unit d'entraïnement pour mécanismes de commande de véhicule moteur

(30) Priorität: 19.12.2002 DE 10260104
(43) Veröffentlichungstag der Anmeldung: 21.09.2005
(73) Patentinhaber: ROBERT BOSCH GMBH, 70442 Stuttgart (DE)
(72) Erfinder: HAUSSECKER, Walter, 77830 Buehlertal (DE); FREUND, Stefan, 76571 Gaggenau (DE); HUCK, Thomas, 77836 Rheinmuenster (DE); OCHS, Markus, 76534 Baden-Baden-Steinbach (DE)
(86) Internationale Anmeldenummer: PCT/DE2003/002371
(87) Internationale Veröffentlichungsnummer: WO 2004/057733

(56) Entgegenhaltungen:
- EP-A- 1 101 968
- EP-A- 1 176 698
- WO-A-01/61133
- DE-C- 19 710 557
- FR-A1- 2 769 427
- JP-A- 60 167 643
- US-A- 5 836 219

## Beschreibung

### Stand der Technik

Die Erfindung betrifft eine Antriebseinheit, insbesondere für Stellantriebe im Kraftfahrzeug, nach der Gattung des unabhängigen Anspruchs 1.

Die FR-A-2769427 zeigt eine Getriebe-Antriebseinheit mit einem Polgehäuse und einem Getriebegehäuse. Dabei sind am Getriebegehäuse konusförmige Fortsätze ausgebildet, die in entsprechende Aufnahmen im Poltopf eingefügt werden. Zur Verbindung des Getriebegehäuses mit dem Poltopf werden die Enden der konischen Fortsätze plastisch verformt, sodass diese Nietköpfe bilden.

Die JP 60167643 A offenbart einen Elektromotor mit einem Gehäuse, bei dem eine Endplatte auf einen Gehäusemantel aufgeschraubt wird. Hierzu sind am Gehäusemantel schraubenförmige Fortsätze ausgeformt, die durch entsprechende Aufnahmen der Endplatte hindurchragen. Durch das Aufschrauben einer Mutter auf das Gewinde des Fortsatzes werden die beiden Teile zueinander fest fixiert.

Mit der WO 01/61133 ist ein Fensterheberantrieb bekannt geworden, dessen Gehäuse einen Poltopf und ein den Poltopf abschließendes Gehäuse umfasst. Das den Poltopf abschließende Gehäuse ist hier ein Getriebegchäuse mit einem integrierten Elektronikgehäuse, wobei zwischen den beiden Gehäuseteilen als Bürstenhalter ein separates Bauteil angeordnet ist, das gleichzeitig als Dichtung zwischen den beiden Cehäuseteilen dient. Der Poltopf bestcht aus einem tiefgezogene abgeflachten Zylindrischen Rohr, an dessen offenem Ende ein Flansch angeformt ist, in dem Löcher zur Aufnahme von Schrauben ausgespart sind. Im Flansch des Getriebegehäuses sind Sackgewinde ausgeformt, in die die Schrauben eingedreht werden, wodurch die beiden Gehäuseteile fest miteinander verbunden sind.

Zur Zentrierung der beiden Gehäuseteile sind bei solchen Gehäusen üblicherweise an einem Flansch zusätzlich Zentrierbohrungen angebracht, in die Zentrierzapfen, die am zweiten Flansch angeformt sind, eingreifen. Dabei sind die Zentrierbohrungen und die entsprechenden Zentrierzapfen völlig unabhängig von den Aufnahmen und Gegenaufnahmen der Verbindungselemente angeordnet. Das Anformen der Zentrierzapfen und Zentrierbohrung ist mit einem zusätzlichen Bearbeitungsschritt verbunden, der insbesondere beim Poltopf aus Metall recht kostspielig ist. Des weiteren sind die Zentrierzapfen hierbei oft von sehr geringem Durchmesser, so dass sie leicht beschädigt werden, wodurch die exakte Zentrierung der beiden Gehäuseteile beeinträchtigt wird.

### Vorteile der Erfindung

Die erfindungsgemäße Vorrichtung mit den Merkmalen des Anspruchs 1 hat den Vorteil, dass die an dem ersten Gehäuseteil angeformten Löcher gleichzeitig für die Aufnahme der Verbindungselemente und für die Aufnahme der Zentrierzapfen des zweiten Gehäuseteils genutzt werden können. Dadurch entfällt ein zusätzlicher Verfahrensschritt für das Anbringen von Zentrierbohrungen. Außerdem ist bei dieser Anordnung der Durchmesser der Zentrierzapfen größer als der der Verbindungselmente, wodurch eine robuste Polgehäusezentrierung geschaffen wird, die über den gesamten Temperatur- und Lebensdauerbereich hohe, vor allem radial auf die Antriebseinheit wirkende, Kräfte aufnchmen kann. Dies garantiert eine exakte Lagerung der Motorbauteile, wodurch die Lebensdauer des Antriebs erhöht und eine Geräuschentwicklung unterdrückt wird.

Die Zentrierlöcher im Flansch des ersten Gehäuseteils sind als Durchgangsöffnungen ausgebildet, und die Höhe des Zentrierzapfens ist kleiner, als die Dieke des ersten Gehäuseteil-Flansches, um eine ausreichende Anpresskraft des Kopfes des Verbindungselements auf den ersten Gehäuseflansch zu gewährleisten.

Durch die in den Unteransprüchen ausgeführten Merkmake sind vorteilhafte Weiterbildungen der Vorrichtung nach dem Anspruch 1 möglich.

Eine weitere Möglichkeit besteht darin, am zweiten Gehäuseteil Gegenaufnahmen, beispielsweise Löcher, anzuformen, an die radial ein umlaufender Zentrierzapfen angeformt ist.

Ist dieser Zentrierzapfen hülsenförmig, kann er im Inneren ein Verbindungselement aufnehmen und ist daher extrem belastbar gegenüber radialen Scherkräften.

Günstig ist es, den Zentrierzapfen zumindest an der äußeren Zylinderwand anzufasen, um das Einführen in die korrespondierenden Zentrierlöcher des ersten Gehäuseteils zu erleichtem.

Da die Zentrierlöcher die Verbindungselemente mitsamt den Zentrierzapfen aufnehmen, ist es notwendig, dass der Kopf der Verbindungselmente so groß gewählt wird, dass dieser genügend Auflagefläche am ersten Gehäuseteil hat.

Die Toleranzen der Zentrierlöcher und der Zentrierzapfen werden vorteilhaft derart gewählt, dass sie zusammen eine Spielpassung bilden. Dabei kann das Spiel der Spielpassung an die Lageranforderungen des Gehäuses der Antriebseinheit angepasst werden.

Wird beispielsweise eine durchgehende Ankerwelle in beiden Gehäuseteilen gelagert, so verhindert solch eine erfindungsgemäße Zentriervorrichtung, dass Scher- oder Biegekräfte auf die Welle einwirken.

Bei Verwendung von Kunststoffgehäusen ist es besonders günstig, die Gegenaufnahmen als Löcher im zweiten Gehäuseflansch auszuformen. Werden beispielsweise Schrauben als Verbindungselemente verwendet, so können diese bei deren Montage ein Gewinde in die Wandung der Gegenaufnahme schneiden.

### Zeichnung

In der Zeichnung sind Ausführungsbeispiele einer erfindungsgemäßen Vorrichtung dargestellt und in der nachfolgenden Beschreibung näher erläutert.

### Es zeigen

- Figur 1: ein Ausführungsbeispiel einer Antriebseinheit im Schnitt,
- Figur 2: eine weitere Antriebseinheit im Schnitt,
- Figur 3: einen vergrößerten Zentrierzapfen,
- Figur 4: einen Schnitt durch den Zentrierzapfen gemäß Figur 3,
- Figur 5: ein Beispiel einer Zentriervorrichtung im Schnitt und
- Figur 6: eine Variation der Zentriervorrichtung gemäß Figur 5.

### Beschreibung

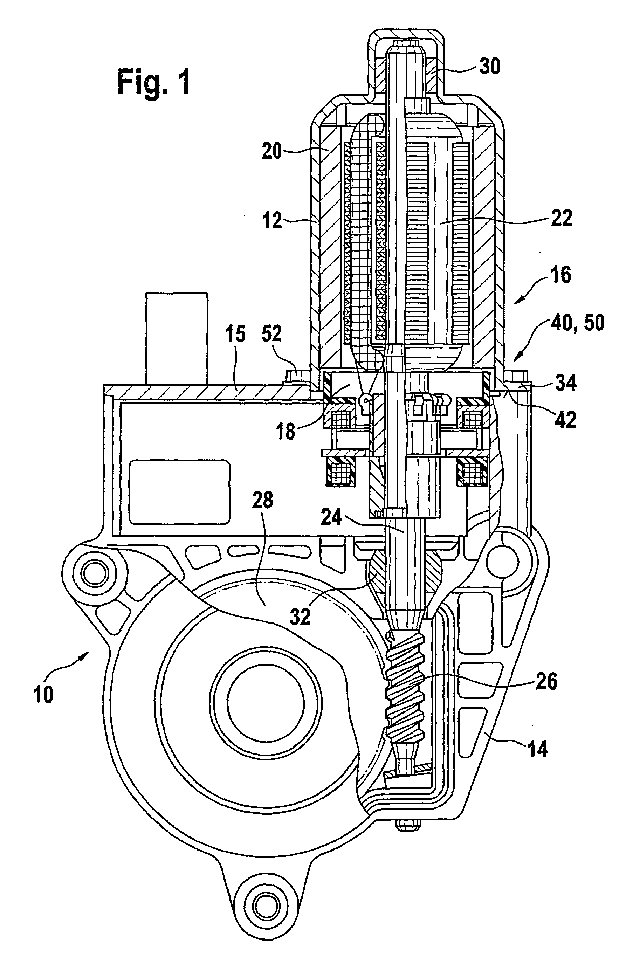

Das in Figur 1 dargestellte Ausführungsbeispiel zeigt eine erfindungsgemäße Antriebseinheit 10, wobei ein erstes Gehäuseteil 12 als Poltopf eines Elektromotors 16 und ein zweites Gehäuseteil 14 als Getriebegehäuse ausgebildet ist. Zwischen dem ersten und dem zweiten Gehäuseteil 12, 14 ist ein Bürstenhalter 18 angeordnet, der in einer alternativen Ausführung ebenfalls als ein weiteres Gehäuseteil 14 ausgebildet sein kann. Im ersten Gehäuseteil 12 sind Dauermagneten 20 angeordnet, die mit einem Anker 22 des Elektromotors 16 zusammenwirken. Der Elektromotor 16 weist eine Ankerwelle 24 auf, die sich durch den Bürstenhalter 18 in das Getriebegehäuse 14 erstreckt. Auf der Ankerwelle 24 ist eine Schnecke 26 angeordnet, die in ein Schneckenrad 28 greift. Die Ankerwelle 24 ist einerseits im ersten Gehäuseteil 12, beispielsweise mittels eines Zylinderlagers 30, und im zweiten Gehäuseteil 14, beispielsweise mittels eines Kalottenlagers 32, gelagert. Im Ausführungsbeispiel ist in das zweite Gehäuseteil 14 ein Elektronikgehäuse 15 integriert.

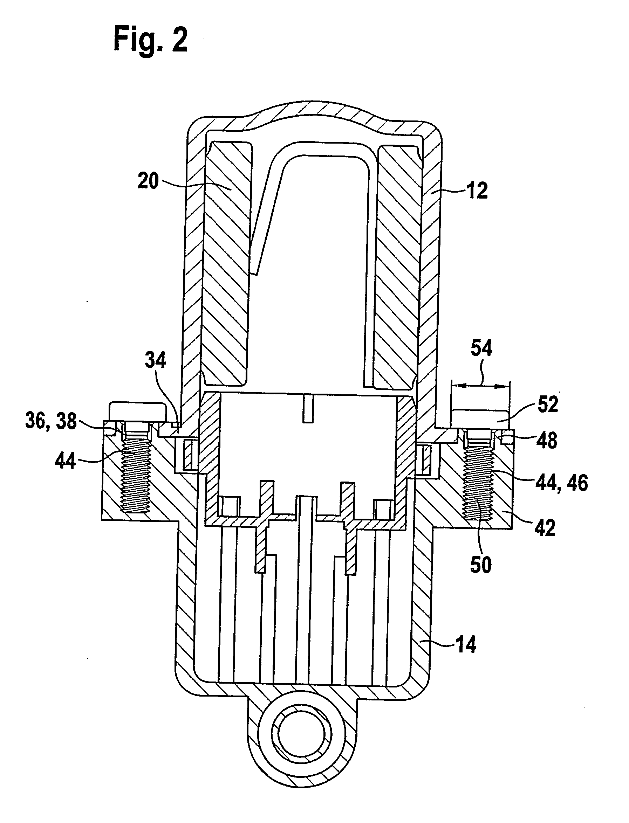

Figur 2 zeigt einen Schnitt durch ein Gehäuse 12, 14 einer weiteren Antriebseinheit 10 mit einem ersten Gehäuseteil 12 und einem zweiten Gehäuseteil 14. Das erste Gehäuseteil 12 weist einen Flansch 34 auf, in dem Zentrierlöcher 36 angeordnet sind, die gleichzeitig als Aufnahmen 38 für Verbindungselemente 40 zwischen den beiden Gehäuseteilen 12, 14 dienen. Das zweite Gehäuseteil 14 weist ebenfalls einen Flansch 42 auf, in dem als Gegenaufnahmen 44 Löcher 46 ausgeformt sind. Um die Gegenaufnahmen 44 herum sind hülsenförmige Zentrierzapfen 48 angeformt, die in die Zentrierlöcher 36 des ersten Gehäuseteils 12 greifen. Die Zentrierzapfen 48 bilden mit den Zentrierlöchern 36 eine Spielpassung, damit die beiden Gehäuseteile 12 und 14 derart gegeneinander zentriert werden, dass eine einwandfreie Lagerung der Ankerwelle 24 erzielt wird. Nachdem die beiden Gehäuseteile 12 und 14 gegeneinander zentriert sind, werden in die Aufnahmen 38 Verbindungselemente 40 eingeführt und in den Gegenaufnahmen 44 befestigt. Im Ausführungsbeispiel werden als Verbindungselemente 40 Schrauben 50 verwendet, deren Köpfe 52 den ersten Flansch 34 gegen den zweiten Flansch 42 pressen. Der Kopfdurchmesser 44 des Verbindungselements 40 ist daher größer als der Durchmesser 56 der Zentrierlöcher 36. Das zweite Gehäuseteil 14 ist hierbei aus Kunststoff gefertigt, so dass die Schraube 50 beim Eindrehen in das Loch 46 ein Gewinde 58 in die Wandung des Lochs 46 schneidet.

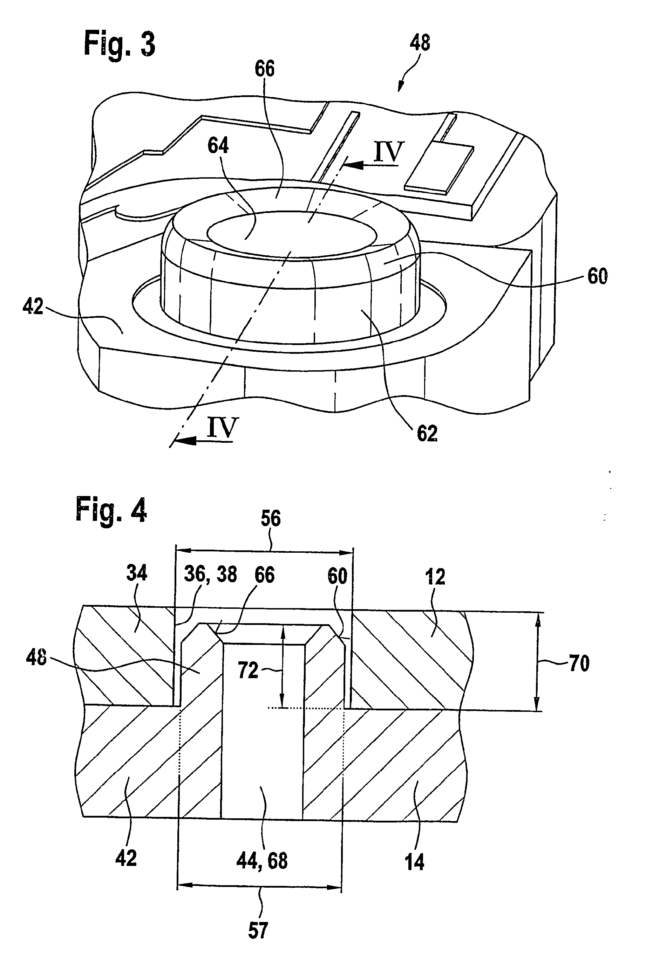

In Figur 3 ist ein Zentrierzapfen 48 gemäß Figur 2 nochmals vergrößert dargestellt. Der Zentrierzapfen 48 umschließt hierbei die als Loch 46 ausgebildete Gegenaufnahme 44 vollständig. Am oberen Ende des Zylinderzapfens 48 ist eine Fase 60 an einer Außenwand 62 angeformt, um das Einführen in das Zentrierloch 36 zu erleichtern. Ebenso ist mit einer Innenwand 64 des Zentrierzapfens 48 eine Fase 66 angeformt, um das Einführen der Verbindungsmittel 40 in den Zentrierzapfen 48 und die Gegenaufnahme 44 zu erleichtern. Der Zentrierzapfen 48 ist hier einstückig mit dem zweiten Gehäuseteil 14, beispielsweise mittels Spritzgußverfahren gefertigt.

Figur 4 zeigt einen Schnitt durch den Zentrierzapfen 48 gemäß IV-IV in Figur 3, wobei die Gegenaufnahme 44 als Durchgangsloch 68 ausgebildet ist. Der Zentrierzapfen 48 ist hierbei in das Zentrierloch 36 des Flansches 34 eingefügt, der eine Dicke 70 aufweist, die größer ist, als die Höhe 72 des Zentrierzapfens 48. Dadurch kann nach dem Einfügen eines Verbindungselements 40 dessen Kopf 52 direkt am Flansch 34 anliegen. Als Verbindungselement 40 kann beispielsweise auch eine Schraube 50 mit einer Mutter 52, oder eine Niete 80 verwendet werden, die an beiden Enden verformt wird, bis sie formschlüssig an den Flanschen 34 und 42 anliegt. Alternativ kann aber auch eine Schraube 50 gemäß Figur 2 verwendet werden, die ein Gewinde in die Gegenaufnahme 44 schneidet.

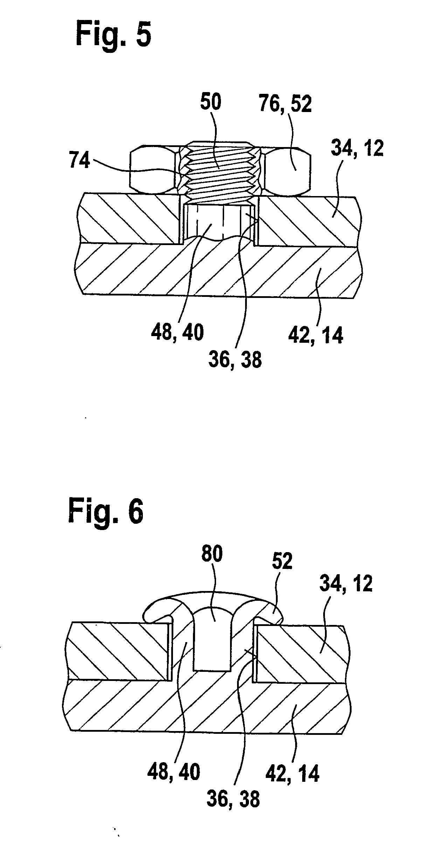

Figur 5 zeigt ein Beispiel im Schnitt, bei dem der Zentrierzapfen 48 gleichzeitig als Verbindungselement 40 ausgebildet ist. Dabei weist der Zentrierzapfen 48 im Bereich des Zentrierloches 36 einen Durchmesser 57 auf, der zusammen mit dem Durchmesser 56 des Zentrierloches 36 eine Spielpassung bildet. In der axialen Verlängerung weist der Zentrierzapfen 48 beispielsweise ein Gewinde 74 auf, auf dem als zweites Teil des Verbindungselements 40 eine Gewindemutter 76 befestigt ist.

Im Beispiel gemäß Figur 6 übernimmt der Zentrierzapfen 48 ebenfalls gleichzeitig die Funktion eines Verbindungselements 40. Vor dem Einführen in den Flansch 34 weist der Zentrierzapfen 48 eine Hülsenform auf, wie sie beispielsweise in Figur 4 dargestellt ist, jedoch ist die Höhe 72 deutlich größer als die Dicke 70 des Flansches 34. Dadurch kann der Zentrierzapfen 48 als Niet 80 dienen, deren freies Ende plastisch über den Flansch 34 geformt wird und als Kopf 52 des Verbindungselements 40 die beiden Flansche 34 und 42 gegeneinander presst. Dabei kann die Niet 80 sowohl im Kaltumformverfahren, beispielsweise bei einem Werkstoffaus Metall, oder im Heißumformverfahren, beispielsweise bei Verwendung von Kunststoff, bearbeitet werden. Auch bei diesem Beispiel bildet der Außendurchmesser 57 des Zentrierzapfens 48 eine Spielpassung mit dem Innendurchmesser 56 des Zentrierlochs 36, um vor der Umformung der Niet 80 die beiden Gehäuseteile 12 und 14 gegeneinander zu zentrieren.

Die Erfindung findet vorzugsweise Anwendung für die Verstellung von beweglichen Teilen im Kraftfahrzeug, wie beispielsweise beim Fensterheber, Schiebedach, Scheibenwischer oder bei der Sitzverstellung. Die Erfindung ist nicht auf bestimmte Getriebebauformen, wie beispielsweise das Schneckengetriebe, beschränkt, sondern bezieht sich auf jede beliebige Ausgestaltung des Getriebes. In einer bevorzugten Ausführung ist das erste Gehäuseteil aus Metall und das zweite Gehäuseteil 14 aus Kunststoff gefertigt, wobei die verwendeten Materialien die Erfindung nicht einschränken. Des weiteren umfasst die Erfindung auch einzelne Merkmale des Ausführungsbeispiels in rohmen der beiliegenden Ansprüche.

## Patentansprüche

1. Antriebseinheit (10) für Stellantriebe im Kraftfahrzeug mit einem ersten Gehäuseteil (12), insbesondere einem Poltopf (12), und einem zweiten Gehäuseteil (14), insbesondere einem Getriebe- oder Elektronikgehäuse (14, 15), die mittels Verbindungselementen (40) verbindbar sind, wobei das erste Gehäuseteil (12) Aufnahmen (38) für die Verbindungselemente (40) aufweiset, **wobei** die Aufnahmen (38) als Zentrierlöcher (36) für korrespondierende Zentrierzapfen (48) ausgebildet sind, die am zweiten Gehäuseteil (14) angeordnet sind, **dadurch gekennzeichnet, dass die Zentrierlöcher (36) als Durchgangsbohrungen (36) in einem Flansch (34) angeordnet sind, dessen Dicke (70) größer ist, als die Höhe (72) des Zentrierzapfens (48).**

2. Antriebseinheit (10) nach Anspruch 1, **dadurch gekennzeichnet, dass** die Verbindungselemente (40) als Schrauben (50) ausgebildet sind, wobei das zweite Gehäuseteil (14) aus Kunststoff gefertigt ist, so dass die Schraube (50) beim Eindrehen in das Loch (46) ein Gewinde (58) in die Wandung des Lochs (46) schneidet.

3. Antriebseinheit (10) nach Anspruch 1, **dadurch gekennzeichnet, dass** das zweite Gehäuseteil (14) Gegenaufnahmen (44, 46) für die Verbindungselemente (40) aufweiset, die zumindest teilweise von den Zentrierzapfen (48) umschlossen sind.

4. Antriebseinheit (10) nach einem der vorhergehenden Ansprüche, **dadurch gekennzeichnet, dass** die Zentrierzapfen (48) hülsenförmig ausgebildet sind.

5. Antriebseinheit (10) nach einem der vorhergehenden Ansprüche, **dadurch gekennzeichnet, dass** an den Zentrierzapfen (48) Einführfasen (60, 66) angeformt sind.

6. Antriebseinheit (10) nach einem der vorhergehenden Ansprüche, **dadurch gekennzeichnet, dass** die Verbindungselemente (40) einen Kopf (52) aufweisen, dessen Durchmesser (54) größer ist, als der Durchmesser (56) der Zentrierlöcher (36).

7. Antriebseinheit (10) nach einem der vorhergehenden Ansprüche, **dadurch gekennzeichnet, dass** der Flansch (34) aus Metall gefertigt ist

8. Antriebseinheit (10) nach einem der vorhergehenden Ansprüche, **dadurch gekennzeichnet, dass** die Zentrierzapfen (48) zusammen mit den Zentrierlöchern (36) eine Spielpassung bilden.

9. Antriebseinheit (10) nach einem der vorhergehenden Ansprüche, **dadurch gekennzeichnet, dass** dem ersten und dem zweiten Gehäuseteil (12, 14) Lagerfunktionen für eine Ankerwelle (24) zugeordnet sind.

10. Antriebseinheit (10) nach einem der Ansprüche 3 bis 9, **dadurch gekennzeichnet, dass** die Gegenaufnahmen (44) als Sack- oder Durchgangslöcher (46), insbesondere in einem Kunststoff-Flansch (42), ausgebildet sind.

## Claims

1. Drive unit (10) for actuating drives in a motor vehicle, having a first housing part (12), in particular a pole pot (12), and a second housing part (14), in particular a gear-mechanism or electronics housing (14, 15), it being possible for the said housing parts to be connected by means of connecting elements (40), with the first housing part (12) having receptacles (38) for the connecting elements (40), with the receptacles (38) being in the form of centring holes (36) for corresponding centring pins (48) which are arranged on the second housing part (14), **characterized in that** the centring holes (36) are arranged in a flange (34) in the form of passage bores (36), the thickness (70) of the said flange being greater than the height (72) of the centring pin (48).

2. Drive unit (10) according to Claim 1, **characterized in that** the connecting elements (40) are in the form of screws (50), with the second housing part (14) being produced from plastic, so that the screw (50) cuts a thread (58) in the wall of the hole (46) when it is screwed into the hole (46).

3. Drive unit (10) according to Claim 1, **characterized in that** the second housing part (14) has mating receptacles (44, 46) for the connecting elements (40), the said mating receptacles being at least partially surrounded by the centring pins (48).

4. Drive unit (10) according to one of the preceding claims, **characterized in that** the centring pins (48) are in the form of sleeves.

5. Drive unit (10) according to one of the preceding claims, **characterized in that** insertion bevels (60, 66) are integrally formed on the centring pins (48).

6. Drive unit (10) according to one of the preceding claims, **characterized in that** the connecting elements (40) have a head (52), the diameter (54) of the said head being greater than the diameter (56) of the centring holes (36).

7. Drive unit (10) according to one of the preceding claims, **characterized in that** the flange (34) is produced from metal.

8. Drive unit (10) according to one of the preceding claims, **characterized in that** the centring pins (48) form a clearance fit together with the centring holes (36).

9. Drive unit (10) according to one of the preceding claims, **characterized in that** bearing functions for an armature shaft (24) are associated with the first and the second housing part (12, 14).

10. Drive unit (10) according to one of Claims 3 to 9, **characterized in that** the mating receptacles (44) are in the form of blind or passage holes (46), in particular in a plastic flange (42).

## Revendications

1. Unité d'entraînement (10) pour mécanismes de commande de véhicule à moteur avec une première partie de carter (12), notamment un élément de logement de pôle (12), et une deuxième partie de carter (14), notamment un carter de boîte de vitesses ou de système électronique (14, 15), pouvant être reliées à l'aide d'éléments de jonction (40), la première partie de carter (12) comportant des logements (38) pour les éléments de jonction (40), les logements (38) prenant la forme de trous de centrage (36) pour les tenons de centrage (48) correspondants disposés au niveau de la deuxième partie de carter (14), **caractérisée en ce que** les trous de centrage (36) prennent la forme d'alésages traversants (36) dans un flasque (34) dont l'épaisseur (70) est plus importante que la hauteur (72) du tenon de centrage (48).

2. Unité d'entraînement (10) selon la revendication 1, **caractérisée en ce que** les éléments de jonction (40) prennent la forme de vis (50), la deuxième partie de carter (14) étant fabriquée en matière plastique, de sorte que la vis (50) taille un filet (58) dans la paroi du trou (46) lors de son introduction dans le trou (46).

3. Unité d'entraînement (10) selon la revendication 1, **caractérisée en ce que** la deuxième partie de carter (14) comporte des contre-logements (44, 46) pour les éléments de jonction (40), lesdits contre-logements étant entourés au moins en partie par les tenons de centrage (48).

4. Unité d'entraînement (10) selon l'une quelconque des revendications précédentes, **caractérisée en ce que** les tenons de centrage (48) prennent une forme de fourreau.

5. Unité d'entraînement (10) selon l'une quelconque des revendications précédentes, **caractérisée en ce que** des biseaux d'introduction (60, 66) sont réalisés sur les tenons de centrage (48).

6. Unité d'entraînement (10) selon l'une quelconque des revendications précédentes, **caractérisée en ce que** les éléments de jonction (40) comportent une tête (52) dont le diamètre (54) est plus important que le diamètre (56) des trous de centrage (36).

7. Unité d'entraînement (10) selon l'une quelconque des revendications précédentes, **caractérisée en ce que** le flasque (34) est fabriqué en métal.

8. Unité d'entraînement (10) selon l'une quelconque des revendications précédentes, **caractérisée en ce que** les tenons de centrage (48) forment un élément d'ajustement du jeu conjointement avec les trous de centrage (36).

9. Unité d'entraînement (10) selon l'une quelconque des revendications précédentes, **caractérisée en ce que** des fonctions de palier de roulement d'arbre d'ancrage (24) sont associées à la première et à la deuxième partie de carter (12, 14).

10. Unité d'entraînement (10) selon l'une quelconque des revendications 3 à 9, **caractérisée en ce que** les contre-logements (44) prennent la forme de trous (46) en poche ou traversants, notamment dans un flasque (42) en matière plastique.
